# EUROPÄISCHE PATENTSCHRIFT

(11) **EP 0 271 672 B1**
(45) Veröffentlichungstag und Bekanntmachung des Hinweises auf die Patenterteilung: **12.06.1996**
(21) Anmeldenummer: 87115517.2
(22) Anmeldetag: 22.10.1987
(51) Int. Cl.: A01D 34/53, A01D 33/06, A01D 34/56, A01D 34/48, A01D 34/54

(54) **Schneckenmäher**
Spindle mower
Faucheuse hélicoidale

(30) Priorität: 22.10.1986 DE 3635925; 22.01.1987 DE 3701668
(43) Veröffentlichungstag der Anmeldung: 22.06.1988
(73) Patentinhaber: Wieneke, Franz, Prof. Dr.-Ing., D-37120 Bovenden (DE)
(72) Erfinder: Wieneke, Franz, Prof. Dr.-Ing., D-37120 Bovenden (DE)
(74) Vertreter: Münich, Wilhelm, Dr.

(56) Entgegenhaltungen:
- FR-A- 2 557 420
- GB-A- 1 403 194

## Beschreibung

### Technisches Gebiet

Die Erfindung bezieht sich auf einen Schneckenmäher mit einer sich mit einer hohen Umfangsgeschwindigkeit drehenden Mähschnecke, die das zu schneidende Gut im freien Schnitt abtrennt.

### Stand der Technik

Schneckenmäher, die rotierende Mähwerke mit hoher Umfangsgeschwindigkeit darstellen, können das Gut im freien Schnitt abtrennen; ferner können derartige Mäher das gemähte Gut auch seitlich oder über Kopf wegfördern.

Von den Schneckenmähern zu unterscheiden sind die Spindelmäher, deren Schneidleisten am Umfang längs oder mit geringer Steigung verlaufen und mit einer am Boden liegenden Gegenschneide zusammenwirken. Derartige Mäher, die für das Mähen von kurzhalmigen Rasenflächen eingesetzt werden, sind beispielsweise aus der GB-A-1 403 194 bekannt.

Schneckenmäher eignen sich deshalb nicht besonders für das Mähen, weil die Schnecke die Halme oder Blätter vor dem Schnitt stark zur Seite neigt. Das Abtrennen wird erschwert und gleichzeitig die Stoppel länger.

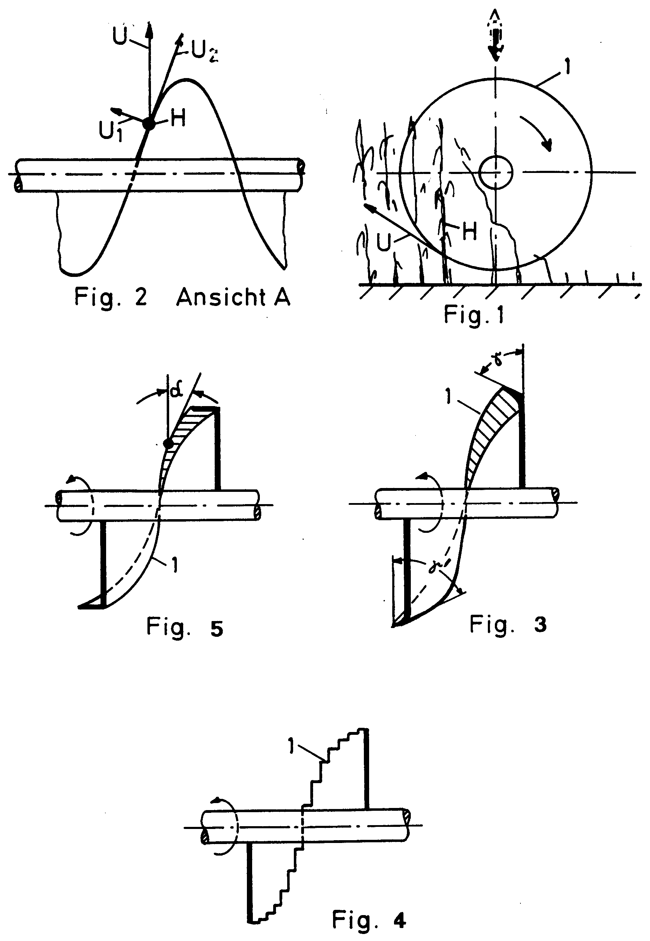

Ferner führt das Schneiden mit einer Schnecke gegenüber einer achsparallelen Schneide zu einer der Schneckenneigung entsprechend verminderten effektiven Schnittgeschwindigkeit u₁ (Fig. 1 und 2). Entsprechend muß die Drehzahl erhöht werden, um die Schnittgeschwindigkeit zu erreichen, die notwendig ist, um Halme H zu trennen. Damit steigt der konstruktive Aufwand für die notwendige Stabilität der Maschine.

Die tangentiale Gleitgeschwindigkeit u₂ kann jedoch praktisch nicht zu einem ziehenden Schnitt führen, da die Wendelfläche der Schnecke senkrecht zur Welle steht, wie bei der Bauart nach GB-A-1 403194.

Für eine Reihe von Mäharbeiten wird ferner die Ablage des gemähten Gutes in Schwaden gewünscht, die bisher einen hohen baulichen Aufwand erfordert, wie bei der Lösung nach DE-A-35 00 096.

### Darstellung der Erfindung

Der Erfindung liegt die Aufgabe zugrunde, einen Schneckenmäher zu schaffen, der das Mähen im freien Schnitt mit möglichst niedriger Umfanggeschwindigkeit der Schnecke ermöglicht, und der zusätzlich ggflls. die Ablage des gemähten Gutes zu einem Schwad durch die axiale Förderwirkung derselben Schnecke im Zusammenwirken mit einer Haube erlaubt.

Die erfindungsgemäße Mähschnecke weist an ihrem Umfang eine durchgehende oder stufenförmige Schneidfläche auf, die mit einem Winkel γ geneigt zur Schneckenachse liegt, so daß der die Achse der Schnecke enthaltende Durchschnitt der Schneidfläche mit dem Winkel γ geneigt zur Schneckenachse verläuft.

Für die axiale Förderung des Mähgutes in einen Mähschwad oder in einen Häcksler oder einfach für ein seitliches Auswerfen ist die Mähschnecke über die Breite an ihrem Umfang sektoral mit einem Mantel umgeben sein, der gleichzeitig auch Schutzfunktion übernimmt; dabei ist der Steigungswinkel α kleiner als der Reibungswinkel des Gutes.

Besonders schwer läßt sich bekanntlich nahezu abgestorbenes, feines Blatt- und Halmgut im freien Schnitt abtrennen; dabei sind hohe Schnittgeschwindigkeiten erforderlich, so daß für die Schneidschnecke eine in Achsrichtung parallel gestufte Schneide anzuwenden wäre, um die Drehzahl der Schnecke relativ niedrig zu halten. Auf einer solchen stufenförmigen Schneide können aber lose, welke Grasblätter und feine Halme hängen bleiben. Die Stufen schließen deshalb mit der Achse einen Abgleitwinkel β ein.

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1 und 2: eine Erläuterung der Funktionsweise eines im freien Schnitt arbeitenden Schneckenmähers.
- Fig. 3 und 4: das Grundprinzip eines erfindungsgemäßen Schneckenmähers,
- Fig. 5: Vorteilhafte Ausgestaltung des Schneckenmähers,
- Fig. 6 bis 13: Varianten eines ersten Ausführungsbeispiels der Erfindung,
- Fig. 14 und 15: ein insbesondere für das Köpfen von Rübenreihen geeignetes zweites Ausführungsbeispiel,
- Fig. 16 bis 18: ein drittes Ausführungsbeispiel der Erfindung, bei der die Mähschnecke mit einem Häcksler kombiniert ist,
- Fig. 19 bis 21: ein viertes Ausführungsbeispiel der Erfindung,
- Fig. 22 bis 27: verschiedene insbesondere für das Köpfen von Rüben geeignete Varianten eines fünften Ausführungsbeispiels, und
- Fig. 28 bis 31: ein sechstes Ausführungsbeispiel der Erfindung die Anwendung des erfindungsgemäßen Schneckenmähers als Mäh- und Bergemaschine.

### Beschreibung von Ausführungsbeispielen

Um eine gute Schneidwirkung der Mähmaschine zu erreichen ohne die Drehzahl der Mähschnecke erhöhen zu müssen, ist die Schneidfläche der Schnecke am Umfang zur Achse geneigt (Fig. 3) oder in der geneigten Fläche gestuft (Fig. 4), ausgeführt; dadurch wird ein ziehender und im letzten Fall ein schlagender Schnitt bei relativ geringer Umfangsgeschwindigkeit erreicht. Ferner ist es auch möglich, daß die Schneidfläche einen Wellenschliff aufweist.

Der Neigungswinkel α der Schneckenfläche ist in Fig. 5 eingetragen; dieser Neigungswinkel ist kleiner als der Reibungswinkel des Gutes mit der Schnecke und führt damit zu einen seitlichen Abrutschen (Gleiten) an der Schneckenfläche. Beispielsweise für frisches Halmgut tritt dieses Abgleiten auf einer Stahlfläche im Bereich von α = 30° bis 35° auf. Den Gegenhalt findet das Gut dabei durch die Reibung an der Haube, welche die Schnecke sektoral umgibt.

Damit wird ein axiales Fördern des Gutes möglich. Dieser relativ geringe Neigungswinkel hat aber zur Folge, daß die effektive Schnittgeschwindigkeit u₁ gegenüber der Umfangsgeschwindigkeit u stark herabgesetzt wird.

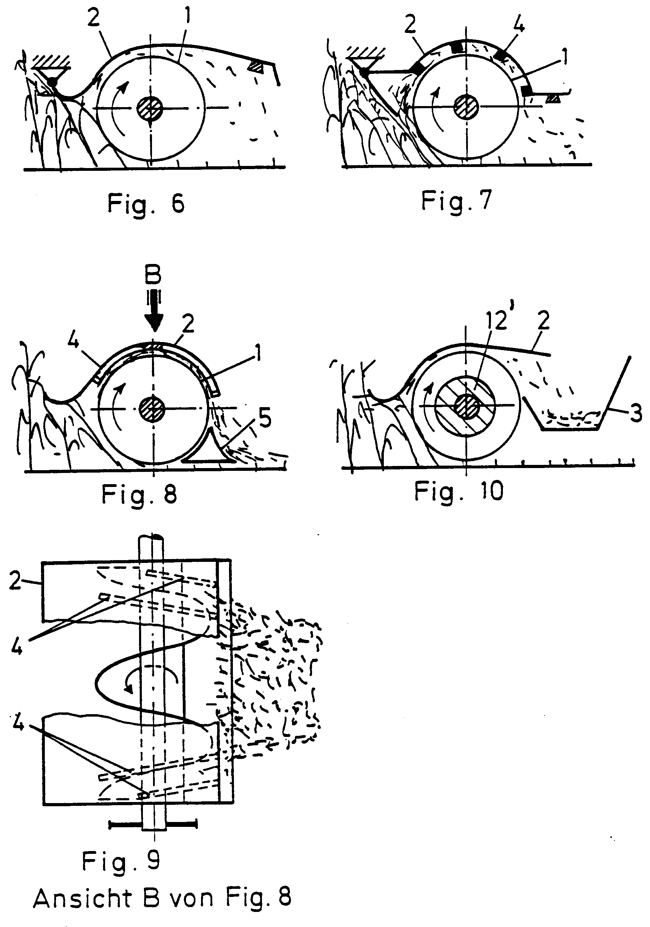

Die Fig. 6 bis 13 zeigen Seitenansichten verschiedener Modifikationen eines ersten Ausführungsbeispiels der Erfindung.

Bei diesen Varianten ist die Mähschnecke (1) sektoral mit einem Mantel (2) umgeben. Der Mantel (2) ist in Fahrtrichtung vorne hochgezogen, so daß das zu mähende Gut leichter in den Spaltraum zwischen Schnecke und Mantel einfließen kann. Im oberen und hintern Bereich verhindert der Mantel das Abschleudern von Steinen und leitet das Gut auf den Boden (Fig. 6 bis 9) oder einen Fangkorb 3 (Fig. 10), wie es beim Rasenmäher gewünscht wird.

Fig. 6 zeigt einen Schneckenmäher, der das Gras mäht und über Kopf fördert, wobei der Mantel (2) das Mähgut über nahezu die gesamte Mähbreite auf den Boden ablegt; der Mantel (2) in Figur 6 besitzt auf der der Mähschnecke zugewandten Seite keine Leisten, so daß das Mähgut unzerschlagen und locker abgelegt wird.

Bei den in den Figuren 7 und 8 dargestellten Varianten trägt der Mantel dagegen auf der Innenseite Leisten (4), die wie die Figur 9 in der Draufsicht zeigt, das Mähgut leicht in der Breite zusammenführen. Gleichzeitig dienen diese Leisten (4) als Anschlag bzw. als Gegenschneiden zur mechanischen Aufbereitung des Gutes um die Trocknungsdauer auf dem Felde zu verkürzen. Der Grad der Aufbereitung, des Zerschlagens und Schneidens läßt sich durch die Leistenzahl und die Neigung der Leisten verändern.

Die in Figur 9 dargestellte Schnecke, deren Steigung von beiden Seiten zur Mitte führt, führt bereits das Mähgut mittig zusammen, wenn die Leisten achsparallel verlaufen würden.

Sehr stark zerschlagenes und verkürztes Gut würde in die Stoppel geworfen werden und nach dem Anwelken oder Trocknen nicht mit den Zinken von Aufnahmetrommel erfaßt werden können.

Deshalb ist vorgesehen, daß das stark aufbereitete Mähgut zunächst auf eine Leitfläche (5) bzw. Ablaufbogen (5) schießt, beim Abgleiten zu einem Teppich verdichtet und auf die Stoppeln abgelegt wird (Fig. 8). Der angetrocknete oder völlig trockene Teppich des Halmguts hängt infolge seiner Faserstruktur zusammen und kann ohne Bröckelverluste von Aufnahmeeinrichtungen angehoben und gefördert werden.

Zum Aufnehmen des Halmgutteppichs eignet sich auch die Mähschnecke selbst.

Das in Fig. 10 dargestellte Ausführungsbeispiel weist ferner einen Elektromotor (Trommelläufer) 12' auf, der in die Mähschnecke als Kern eingebaut ist und die die Mähschnecke 1 antreibt.

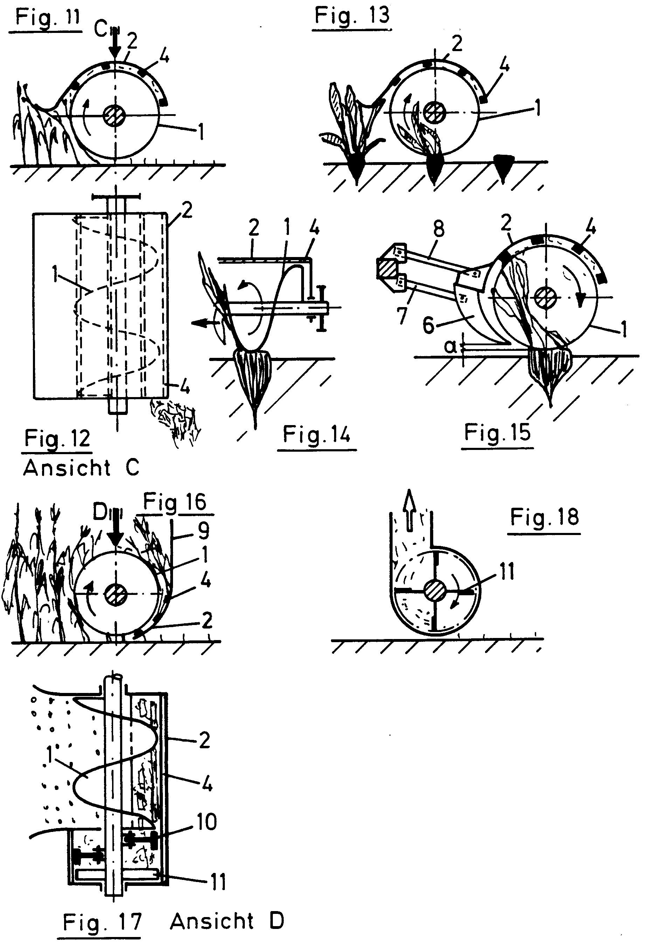

Die Fig. 11 und 12 zeigen, daß für die axiale Förderung des Gutes die Innenseite des Mantels dann achsparallele Führungsleisten 4 trägt. Es ist mit der Anordnung nach den Figuren 11 und 12 natürlich auch möglich, stehendes Halmgut zu mähen und seitlich zu einem Schwad abzulegen.

Die in Fig. 13 dargestellte Variante ist besonders für das Köpfen von mehreren Rübenreihen geeignet. Das abgeschlagene Blatt wird an den Leisten (4) längs geführt und seitlich ausgestreut.

Die Fig. 14 und 15 zeigen eine kurze Mähschnecke für das Köpfen der Rübenreihe. Die Mähschnecke ist von dem Mantel (2) umgeben, der an der Vorderseite einen Taster (6) trägt. Auf der Innenseite ist der Mantel mit achsparallelen Leisten (4) belegt. Das abgeschlagene Blatt wird so seitlich ausgeworfen. Mähschnecke und Haube werden als Einheit von einem Gelenkprallelogramm (7, 8) aufgenommen. Der untere Lenker (7) ist kürzer als der obere, so daß die Mähschnecke (1) mit dem Taster (6) beim Anheben nach hinten wegkippt; die Distanz (a) zwischen Unterkante des Tasters (6) und der Außenlinie Schnecke wird größer und damit die Köpfdicke, wie es gewünscht wird.

Die Fig. 16 bis 18 zeigen als drittes Ausführungsbeispiel die Kombination zwischen einer erfindungsgemäßen Mähschnecke und einem einem Häcksler.

Die Mähschnecke (1) trennt die Halme oder Maisstengel ab und wirft sie überkopf in einen Trog, den der Mantel (2) mit seiner nach oben führenden Verlängerung (9) bildet. Die axial angeordneten Leisten (4) leiten das Mähgut in den Häcksler (10). Das gehäckselte Gut wird durch das Wurfrad (11) ausgeworfen (Fig. 17 und 18).

Die Drehrichtung der Mähschnecke im Uhrzeigersinn führt zu einer Überkopf-Förderung des Gutes und damit zu einem Aufnehmen; es können dann leicht weitere Arbeitsoperationen, z. B. Aufbereiten oder ein Fördern in bestimmter Richtung, sich anschließen.

Für die Aufgabe des Mähens und Einmulchen kann die Mähschnecke unterschlächtig das Mähgut abwerfen und gegebenenfalls - mit zusätzlichen Werkzeugen besetzt - auch Erde auswerfen und damit das Mähgut mit Boden vermischen.

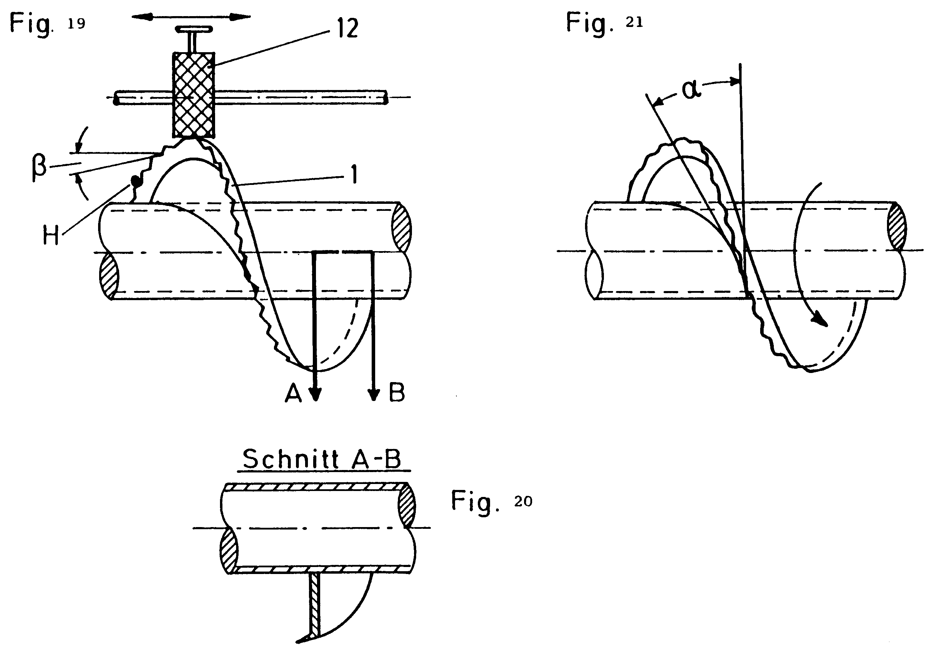

Die Fig. 19 folgende zeigen ein viertes Ausführungsbeispiel der Erfindung mit einer Gestaltung der Schneckenschneide, die sich besonders für das Abtrennen von nahezu abgestorbenem, feinem Blatt- und Halmgut im freien Schnitt eignet. Hierfür sind hohe Schnittgeschwindigkeiten erforderlich, so daß für die Schneidschnecke eine in Achsrichtung parallel gestufte Schneide anzuwenden wäre, um die Drehzahl der Schnecke relativ niedrig zu halten. Auf einer solchen stufenförmigen Schneide können aber lose, welke Grasblätter und feine Halme hängen bleiben.

Deshalb sind erfindungsgemäß die Schneidstufen im geneigten oder achsparallel verlaufenden Umfang der Schnecke etwas schräg ausgebildet, wie dies Fig. 19 und 20 in einer Ansicht von oben auf die Mähschnecke 1 zeigen. Der feine Halm H oder ein faseriges Blatt rutschen auf der unter dem Winkel β geneigten Stufe ab.

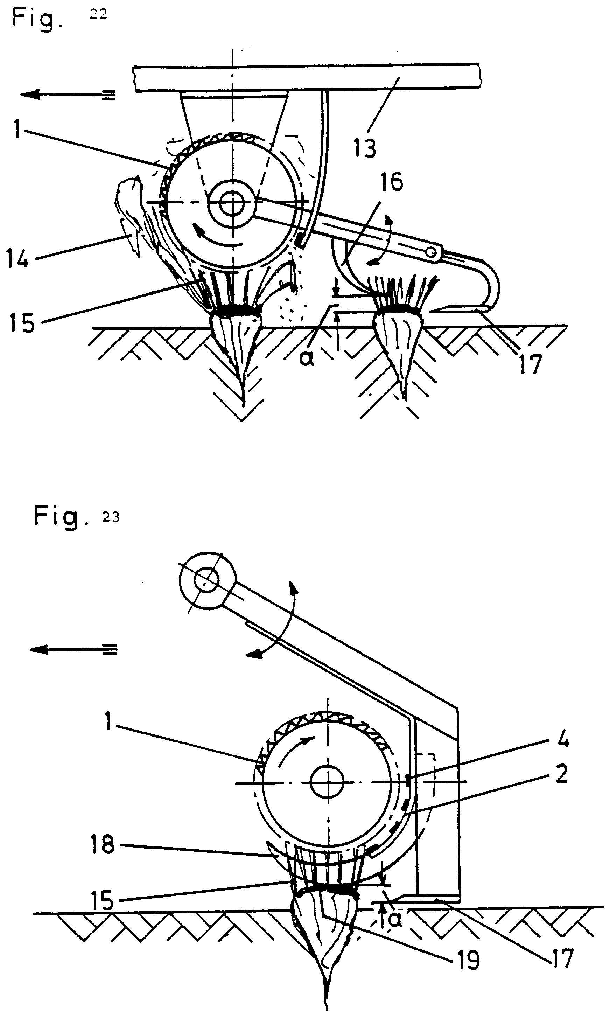

Für frische Schnittgüter, z. B. für grünes, pralles Rübenblatt eignet sich ein Wellenschliff des geneigten bzw. achsparallelen Schneckenumfangs (Fig. 21). Die Schneide der Mähschnecke größerer Länge läßt sich in der Rotation durch einen festen Schleifstein (12), der hin und her bewegt wird, schärfen (Fig. 19). In einfacher Weise, insbesondere bei geringerer Schneckenlänge, kann das Schärfen durch eine auf der ganzen Mähbreite der Schnecke aufliegenden Leiste oder Klappe, die einen Schleifstein trägt, erledigt werden.
Die Figuren 22 bis 27 zeigen verschiedene Kombinationen von Mähschnecke, Taster und Nachköpfer.

Für das mehrreihige Vorköpfen des Blattes ist die Mähschnecke (1) fest am Rahmen (13) angebracht. Das abgemähte Blatt kann, wie bereits vorstehend beschrieben, seitlich ausgetragen werden oder wie in Fig. 22 dargestellt, mit gezahnter Mähschnecke, fein zerkleinert, in voller Breite auf den Boden geworfen werden. Die nach dem Vorköpfen (Abmähen) des Blattes (14) stehenbleibenden Blattstoppeln (15) werden vom Taster (16) überfahren, der mit dem Messer (17) gekoppelt ist. Die Distanz (a) des Köpfmessers (17) zum Taster ergibt die Stärke des Nachköpfens. Die in Fig. 22 dargestellte Lösung stellt gegenüber den bisher geübten Verfahren des getrennten Abschlegelns des Blattes, dem seitlichen Fördern und dem Nachköpfen eine Vereinfachung und eine kompaktere bauliche Anordnung dar.

Die in den Figuren 23 bis 27 dargestellten Lösungen beziehen sich auf das Köpfen jeweils einer Rübenreihe und sind für ein verstopfungsfreies Arbeiten auch größerer Blattmengen geeignet.

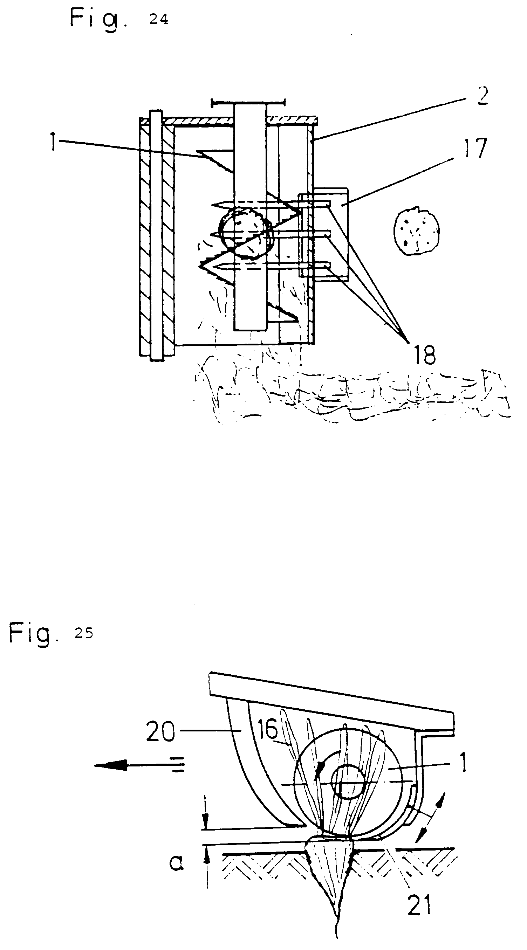

In den Figuren 23 und 24 mäht die Schnecke (1) das Rübenblatt bis auf die Stoppeln (15) ab. Die Mähschnecke (1) ist im hinteren Bereich von einem Mantel (2) umgeben, der auf der Innenseite achsparallele Leisten (4) trägt. Auf der Rückseite des Mantels (2) sind Tastfinger (18) angebracht, welche die Blattstoppeln (15) nach vorn durchgreifen, wobei sie über den Kopf (19) des im Boden festen Rübenkörpers gleiten. In der Regel reichen drei bis vier Finger im Abstand von jeweils etwa 3 cm aus, um den Rübenkopf abzutasten. Mit dem Tastfinger (18), fest oder durch Gelenkvierecke gesteuert, ist das Köpfmesser (17) verbunden. Die Distanz (a) zwischen der Unterkante der Tastfinger (18) und dem Köpfmesser (17) ergibt die Stärke (a) des Nachköpfens.

Die in den Figuren 23 und 24 dargestellte Lösung zeichnet sich durch ein sicheres Abtasten des Rübenkopfes aus, wobei auch starkes Rübenblatt störungsfrei abgeführt wird.

Ein verstopfungsfreies Abmähen des Rübenblattes ermöglicht auch die Lösung nach Fig. 25. Die Tastfinger (20) durchgreifen das volle Blatt (16) vor der Mähschnecke (1), die entgegen dem Uhrzeigersinn läuft und so die Tastfinger stetig vom gemähten Blatt abstreift. Die Schnittebene des Messers (21) liegt um den Betrag (a) gegenüber der Unterkante der Tastfinger (20) tiefer. Die Tastfinger (20) lassen sich entsprechend der gewünschten Köpfstärke (a) in der Höhe versetzen, während sich das Messer (21) um die Mähschnecke (1) verschwenken läßt.

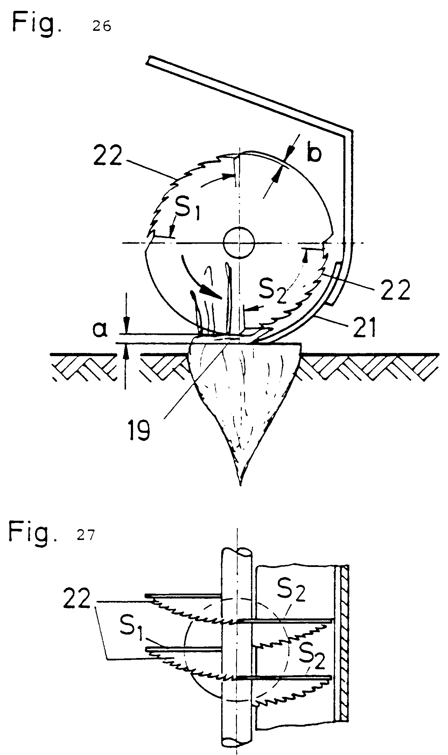

In der Lösung nach den Fig. 26 und 27 übernimmt die Mähschnecke (1) selbst auch das Abtasten des Rübenkopfes (19). Die durchlaufende Schneide (22) der Mähschnecke (1) ist durch die Sektionen s₁ und s₂ unterbrochen, die nicht angeschärft sind und die Schneide (22) um den Betrag b radial überragen; die Sektionen s₁ und s₂ stützen somit die Schnecke (1) in der Rotation auf dem Rübenkopf (19) ab. Da die Stützsektionen s₁ und s₂ gegenüber der Schneckenschneide keine oder eine geringe negative Steigung besitzen, wird durch Stützsektionen die Schnittfläche insgesamt praktisch nicht unterbrochen. Die Schneidschnecke arbeitet mit dem Messer (21) zusammen; es köpft, entsprechend dem eingestellten Abstand a, die Rübe ab, wobei die abgeköpfte Scheibe von der Schneidschnecke erfaßt und zerkleinert wird. Mit der Lösung nach den Fig. 26 und 27 läßt sich damit ein sicheres, verstopfungsfreies Mähen des Blattes und ein exaktes Köpfen auf engstem Raum vereinen.

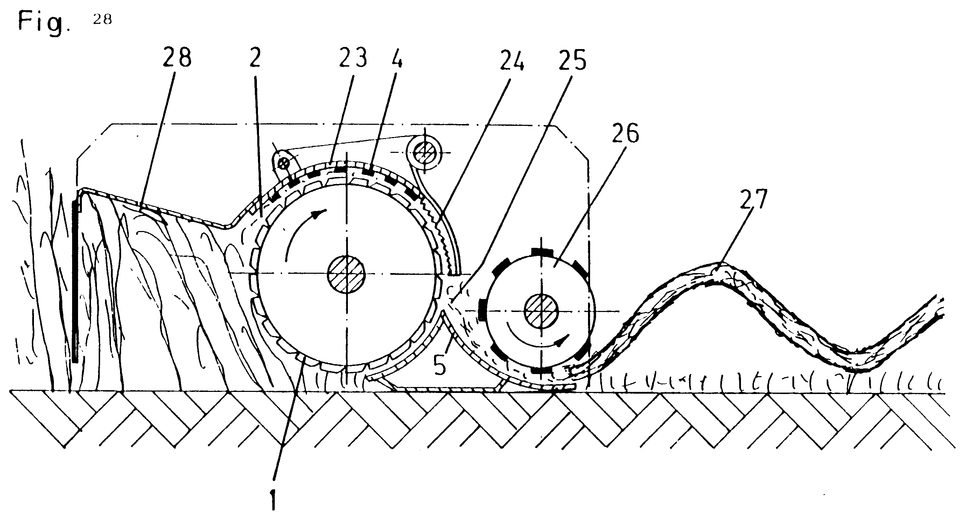

Die Fig. 28 folgende zeigen als sechstes Ausführungsbeispiel die Anwendung des erfindungsgemäßen Schneckenmähers als Mäh- und Bergemaschine für Halmgut.

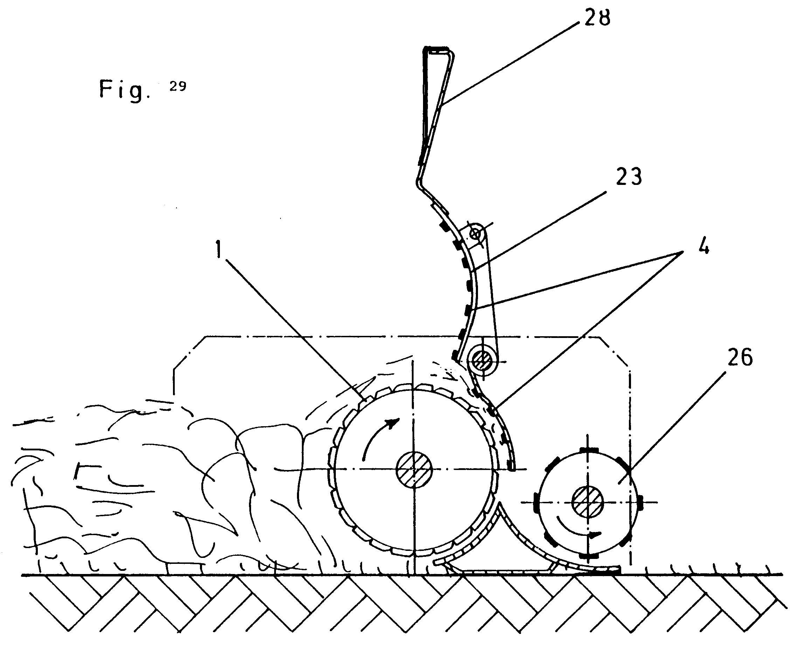

Zur Beschleunigung der Trocknung gemähten Halmgutes ist es bekannt, die Halme und Blätter durch Knicken, Quetschen oder Zerreißen aufzubereiten. Eine noch intensivere mechanische Aufbereitung läßt sich durch die Schneidschnecke selbst im Zusammenwirken mit einem Leistenbelag an der Innenseite des Mantels (23) erreichen (Fig. 28) Die Schneidschnecke (1) nimmt das gemähte Gut (2) hoch und führt es an den Leistenbelag (4) der Mähschnecke im oberen Bereich des Mantels vorbei; das Gut wird so zerschnitten und gequetscht. Der sich anschließende Leistenbelag (24) weist eine geringere Profiltiefe auf. Das bereits vorzerkleinerte Gut wird in diesem Leistenbereich faserig aufgeschlissen und gemahlen. Die Schnecke (1) wirft dann das feinzerkleinerte, faserige Material (25) in den Spalt zwischen dem Gleitbogen (5) und der Walze (26) ein. Die profilierte Walze (26) fördert das Gut unter Auflagedruck nach hinten und verdichtet es zu einer Matte (27). Die Walze (25) eilt mit ihrer Umfangsgeschwindigkeit etwas vor, so daß die gepreßte Halmgutmatte wellig auf die Stoppel gelegt wird. Damit kann die Luft leicht von der Seite unter die Matte eintreten und diese auch von unten trocknen. Nach einer völligen oder teilweisen Trocknung der Matte (27) kann diese oder auch ein loster Halmgutschwad von der Schnecke (1) wieder aufgenommen werden; die Schnecke (1) arbeitet dann als eine Halmgutförderschnecke, was aufgrund der relativ geringen Schneckensteigung möglich ist (Fig. 29). An die Schnecke (1) schließt sich dann ein Gebläse an, wie dies bereits in Fig. 17 vorstehend beschrieben worden ist.

Für das Aufnehmen von einem losen, lockeren Halmgutschwad wird die Schutzhaube (28) und die mit den Leisten (4) belegte Mantelsektion hochgeklappt. Das lose Halmgut kann leicht und ohne Stau an den hochgekappten Wandflächen entlang axial in das Förderbebläse einfließen (Fig. 29).

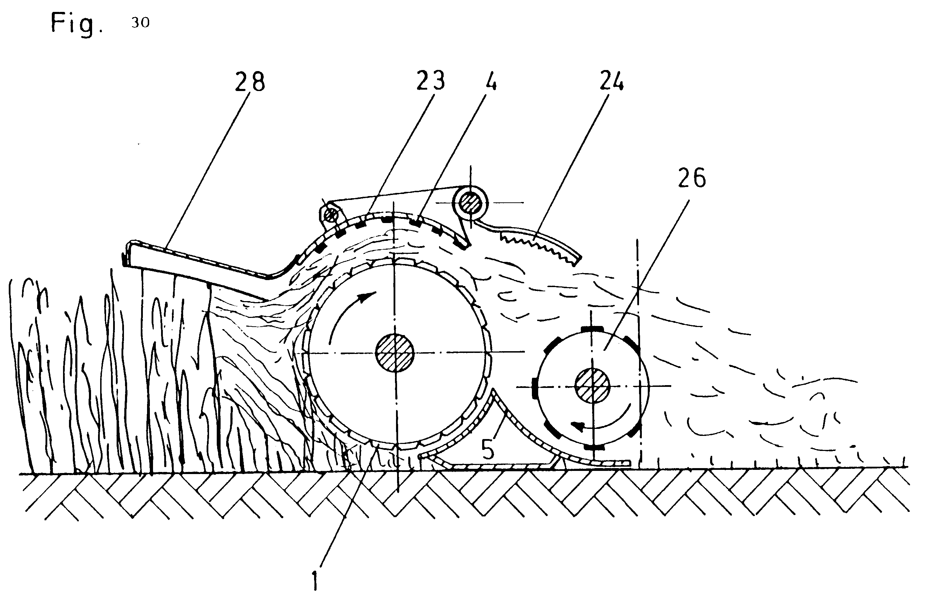

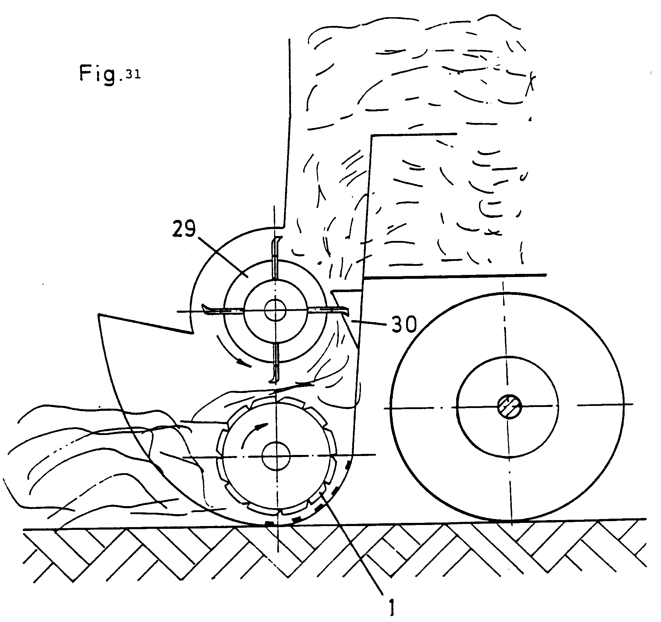

In Fig. 30 sind die Leistensektionen (23) und (24) (Einlaufsektion und weitere Sektion) für das Mähen hochgesetzt bzw. hochgeklappt. Diese variablen Anordnungen, wie sie Fig. 28 und 29 zeigen, lassen sich auch als Mäh-und Aufnahmeorgan zum Ladewagen verwenden. In Fig. 31 nimmt eine Förderwalze (29) das Halmgut von der Schnecke (1) ab und streift es über das Messer (30).

## Patentansprüche

1. Schneckenmäher zum Schneiden von Halmgut aller Art im freien Schnitt, mit einer sich mit einer hohen Umfangsgeschwindigkeit drehenden Mähschnecke, die an ihrem radialen, außen liegenden Rand eine Schneidfläche aufweist,
dadurch **gekennzeichnet**, daß der die Achse der Schnecke enthaltende Durchschnitt der Schneidfläche mit einem Winkel γ geneigt zur Schneckenachse verläuft.

2. Schneckenmäher nach Anspruch 1,
dadurch **gekennzeichnet**, daß die Schneidfläche Stufen aufweist, deren Schnittlinie einen Winkel (β) mit der Schneckenachse einschließen.

3. Schneckenmäher nach Anspruch 1,
dadurch **gekennzeichnet**, daß die Schneidfläche einen Wellenschliff aufweist.

4. Schneckenmäher nach einem der Ansprüche 1 bis 3,
dadurch **gekennzeichnet**, daß ein Mantel (2) die Mähschnecke umgibt.

5. Schneckenmäher nach Anspruch 4,
dadurch **gekennzeichnet**, daß der Mantel (2) an der Mähschnecke zugewandten Seite mit Leisten (4) belegt ist, die geneigt bzw. achsparallel angeordnet sind, wobei der Steigungswinkel (α) der Schnecke kleiner als der Gleitreibungswinkel des Mähgutes ist.

6. Schneckenmäher nach einem der Ansprüche 1 bis 5,
dadurch **gekennzeichnet**, daß die Schnecke (1) im oberen Bereich von einem Mantel umgeben ist, der in der Einlaufsektion (23) mit Leisten belegt ist, der sich eine weitere Sektion, die im Vergleich zu den vorgenannten feiner profiliert sind, anschließt.

7. Schneckenmäher nach Anspruch 6,
dadurch **gekennzeichnet**, daß die Leisten (4) achsparallel und die Leistenbelegung (24) V-förmig ausgebildet ist.

8. Schneckenmäher nach Anspruch 6,
dadurch **gekennzeichnet**, daß der Mantel aus zwei separaten Teilen, die Einlaufsektion (23) und eine weitere Sektion (24), besteht, wobei die Einlaufsektion (23) hochsetzbar und die weitere Sektion (24) hochklappbar ist.

9. Schneckenmäher nach einem der Ansprüche 1 bis 8,
dadurch **gekennzeichnet**, daß hinter der Mähschnecke (1) eine Prall- und Leitfläche (5) bzw. Ablaufbogen (5) angeordnet ist.

10. Schneckenmäher nach einem der Ansprüche 1 bis 9,
dadurch **gekennzeichnet**, daß die Mähschnecke (1) in ihrer Steigung beidseitig zur Mitte führt und hinter der Mähschnecke (1) mit dem Mantel (2) ein Fangkorb (3) angeordnet ist.

11. Schneckenmäher nach Anspruch 6,
dadurch **gekennzeichnet**, daß der Schnecke (1) eine profilierte Walze (26) nachgeordnet ist, die mit dem Ablaufbogen (5) einen Spalt für das zwischen Schnecke und Leistenbelag (26) ausfließende, feinzerkleinerte Gut (25) bildet.

12. Schneckenmäher nach Anspruch 11,
dadurch **gekennzeichnet**, daß die Walze (26) unter Druck auf dem Halmgut (25) drehend aufliegt und mit einer gegenüber der Fahrgeschwindigkeit höheren Umlaufgeschwindigkeit umläuft, wie sie für eine wellige Ablage des verdichteten Halmgutteppichs (27) notwendig ist.

13. Schneckenmäher nach den Ansprüchen 6 und 7,
dadurch **gekennzeichnet**, daß die Schutzhaube (28) und die vordere Einlaufsektion (23) hochklappbar ist und sich der Schnecke (1) als Aufnahmeorgan ein Fördergebläse oder mechanischer Förderer anschließt.

14. Schneckenmäher nach den Ansprüchen 1 bis 13,
dadurch **gekennzeichnet**, daß auf gleicher Achse, sich in Förderrichtung anschließend, ein Häcksler (10) und ein Wurfrad (11) angeordnet ist.

15. Schneckenmäher nach den Ansprüchen 1 bis 14,
dadurch **gekennzeichnet**, daß der Mantel (2) nach oben durch eine Leitwand (9) fortgeführt wird, so daß sich zur Mähschnecke im hinteren Bereich eine Fördermulde bildet.

16. Schneckenmäher nach den Ansprüchen 1 bis 15,
dadurch **gekennzeichnet**, daß der Mantel (2) vorn einen Taster (6) trägt und der Schneckenmäher von einen Gelenkviereck aufgenommen ist, dessen unterer Lenker gegenüber dem oberen verkürzt ist.

17. Schneckenmäher, nach einem der Ansprüche 1 bis 16,
dadurch **gekennzeichnet**, daß der in einem Maschinenrahmen (13) fest angeordneten Mähschnecke (1) eine Köpfeinrichtung bestehend aus Taster und Köpfmesser, nachgeordnet ist.

18. Schneckenmäher nach einem der Ansprüche 1 bis 17,
dadurch **gekennzeichnet**, daß die Mähschnecke im Uhrzeigersinn umlaufend, hinten mit einem Mantel (2) umgeben ist, an dem Tastfinger (18) angeordnet sind, die die Mähschnecke nach vorn untergreifen, in Fahrtrichtung nach oben kufenförmig abgebogen sind und hinter denen ein Köpfmesser (17) liegt, derart, daß dieses um eine Distanz (a) gegenüber der Unterkante der auf den Rübenkopf aufliegenden Tastfinger nach unten versetzt ist.

19. Schneckenmäher nach einem der Ansprüche 1 bis 18,
dadurch **gekennzeichnet**, daß vor der Mähschnecke (1), die entgegen dem Uhrzeigersinn umläuft, Tastfinger (20) angeordnet sind, deren Unterkante zur Unterkante der Mähschnecke (1) um die Distanz (a) höher liegt.

20. Schneckenmäher nach einem der Ansprüche 1 bis 19,
dadurch **gekennzeichnet**, daß die Schneide (22) der Mähschnecke (1) durch Stützsektionen (s₁; s₂) unterbrochen ist, welche die Schneide um einen geringen Betrag (b) in radialer Richtung überragen und ohne Steigung (als Scheibensegment senkrecht zur Achse) verlaufen und ferner, daß der Schnecke ein untergreifendes Messer (21) zugeordnet ist, das um Köpfscheibendicke (a) nach unten versetzt ist.

21. Schneckenmäher nach einem der Ansprüche 1 bis 20,
dadurch **gekennzeichnet**, daß der rotierenden Mähschnecke ein Schleifstein (12) radial zugestellt ist, der auf einer Stange axial hin- und her bewegbar ist.

22. Schneckenmäher nach einem der Ansprüche 1 bis 21,
dadurch **gekennzeichnet**, daß die Mähschnecke 1 durch einen Elektromotor 12' angetrieben ist, der in die Mähschnecke als Kern eingebaut ist.

## Claims

1. Auger mower for mowing stalk and blade material of any kind by free cuts, comprising a mowing auger rotating at a high peripheral speed and presenting a cutting surface on its radial outer edge,
**characterized in** that the cross-section of said cutting surface, which contains the axis of said auger, extends at an inclination at an angle (γ) relative to the auger axis.

2. Auger mower according to Claim 1,
**characterized** in that said cutting surface presents steps whose lines of section form an angle (β) relative to the auger axis.

3. Auger mower according to Claim 1,
**characterized** in that said cutting surface presents an undulated ground surface.

4. Auger mower according to any of Claims 1 to 3,
**characterized** in that a jacket (2) surrounds said mowing auger.

5. Auger mower according to Claim 4,
**characterized** in that said jacket (2) is covered by bars (4) on its side facing said mowing auger, which bars are disposed obliquely or in parallel to the axis, with the pitch angle (α) of said auger being smaller than the sliding-friction angle of the mown material.

6. Auger mower according to any of Claims 1 to 5,
**characterized** in that said auger (1) is surrounded by a jacket in its upper region, which is covered with bars in its entry section (23) joined by another section having a profile finer than the profiling of the preceding ones.

7. Auger mower according to Claim 6,
**characterized** in that said bars (4) are parallel to the axis and that said bar lining (24) has a V-shaped configuration.

8. Auger mower according to Claim 6,
**characterized** in that said jacket consists of two separate parts, i.e. said entry section (23) and another section (24), with said entry section (23) being adapted to be raised and with said further section (24) being adapted for being swung upward.

9. Auger mower according to any of Claims 1 to 8,
**characterized** in that an impact and guiding surface (5) or flow-off arc (5), respectively, is disposed behind said mowing auger (1).

10. Auger mower according to any of Claims 1 to 9,
**characterized** in that said mowing auger (1) leads towards the center on either side, in terms of its inclination, and that a collector (3) is disposed behind said mowing auger (1) with said jacket (2).

11. Auger mower according to Claim 6,
**characterized** in that said auger (1) is joined by a downstream profiled roller (26) which cooperates with said flow-off arc (5) so as to form a gap for the finely cut material (25) flowing out between said auger and said bar lining (26).

12. Auger mower according to Claim 11,
**characterized** in that said roller (26) rests, under pressure, rotatingly on said stalk and blade material (25) and rotates at a rotating speed higher than the travelling speed, which is required for a wavy deposition of the carpet (27) of compacted stalk and blade material.

13. Auger mower according to the Claims 6 and 7,
**characterized** in that protective hood (28) and said front entry section (23) are adapted to be swung upward, and that said auger (1) as collector element is joined by a downstream conveyor blower or a mechanical conveyor.

14. Auger mower according to the Claims 1 to 13,
**characterized** in that a chaffer (10) and a tedding wheel (11) are disposed on the same axis for joining in the conveying direction.

15. Auger mower according to the Claims 1 to 14,
**characterized** in that said jacket (2) is extended in the upward direction by a baffle (9) so as to form a conveying trough in the rear zone relative to said mowing auger.

16. Auger mower according to the Claims 1 to 15,
**characterized** in that said jacket (2) carries a feeler (6) in its front part, and that the auger mower is enclosed by an articulated quadrangle having a lower arm having a shorter length than the upper arm.

17. Auger mower according to any of Claims 1 to 16,
**characterized** in that a topping means consisting of a feeler and a topping knife is disposed to join said mowing auger fixedly disposed in a machine frame (13).

18. Auger mower according to any of Claims 1 to 17,
**characterized** in that said mowing auger rotating in a clockwise sense is surrounded by a jacket (2) in its rear part, with feeler fingers (18) being disposed on said jacket which extend below said mowing auger in a forward direction, are bent upward in a runner-shaped form in the travelling direction, and behind which a topping knife (17) is so disposed that the latter is offset downward by a distance (a) relative to the lower edge of the feeler fingers resting on the beet top.

19. Auger mower according to any of Claims 1 to 18,
**characterized** in that feeler fingers (20) are disposed in front of said auger (1) rotating in a counter-clockwise sense, which feeler fingers have lower edges higher, by a distance (a), than the lower edge of said mowing auger (1).

20. Auger mower according to any of Claims 1 to 19,
**characterized** in that the cutting edge (22) of said mowing auger (1) is interrupted by supporting sections (*s*₁; *s*₂) which project beyond said cutting edge in a radial direction by a slight amount (b) and extend without any inclination (as disk segment orthogonal on the axis), and moreover that a knife (21) extending underneath said auger is associated with said auger, which is offset downward by the thickness (a) of the topping slices.

21. Auger mower according to any of Claims 1 to 20,
**characterized** in that a grindstone (12) is radially applied against said rotating mowing auger (1), which is adapted for axial reciprocating movement on a rod.

22. Auger mower according to any of Claims 1 to 21,
**characterized** in that said mowing auger is driven by an electric motor (12') which is incorporated as core into said mowing auger.

## Revendications

1. Faucheuse à hélice à faucher du matériau en tiges et feuilles d'herbe de tout genre, en coupe libre, qui comprend une hélice à faucher qui tourne à une grande vitesse circonférentielle et présente une surface de coupe sur son bord radialement extérieur,
**caractérisée en** ce que la section de ladite surface de coupe, qui renferme l'axe de ladite hélice, s'étend à une inclinaison par un angle (γ) relatif à l'axe de l'hélice.

2. Faucheuse à hélice selon la revendication 1,
**caractérisée** en ce que ladite surface de coupe présente des gradins dont les lignes de section forment un angle (β) relatif à l'axe d'hélice.

3. Faucheuse à hélice selon la revendication 1,
**caractérisée** en ce que ladite surface de coupe présente une face meulée ondulée.

4. Faucheuse à hélice selon une quelconque des revendications 1 à 3,
**caractérisée** en ce qu'une chemise (2) entoure ladite hélice à faucher.

5. Faucheuse à hélice selon la revendication 4,
**caractérisée** en ce que ladite chemise (2) est garnie des barrettes (4) sur son côté en face de ladite hélice à faucher, lesquelles barrettes sont disposées en biais ou en parallèle à l'axe, l'angle d'hélice (α) de ladite hélice étant plus petit que l'angle de frottement à glissement du matériau fauché.

6. Faucheuse à hélice selon une quelconque des revendications 1 à 5,
**caractérisée** en ce que ladite hélice (1) est entourée par une chemise dans sa zone supérieure, qui est garnie des barrettes dans tout son tronçon (23) suivi d'un autre tronçon à un profil plus fin que le profil des tronçons lui précédants.

7. Faucheuse à hélice selon la revendication 6,
**caractérisée** en ce que lesdites barrettes (4) sont en parallèles à l'axe, et en ce que ladite garniture en barrettes (24) présente une configuration en V.

8. Faucheuse à hélice selon la revendication 6,
**caractérisée** en ce que ladite chemise est composée de deux parties séparées, notamment ledit tronçon d'entrée (23) et ledit autre tronçon (24), ledit tronçon d'entrée (23) étant approprié à être monté, et ledit autre tronçon (24) étant prévu à être pivoté en haut.

9. Faucheuse à hélice selon une quelconque des revendications 1 à 8,
**caractérisée** en ce qu'une surface de rebondissement et de guidage (5) ou respectivement un arc d'écoulement (5) est disposé derrière ladite hélice à faucher (1).

10. Faucheuse à hélice selon une quelconque des revendications 1 à 9,
**caractérisée** en ce que ladite hélice à faucher (1) est dirigée vers le centre des deux côtés, en ce qui concerne son inclinaison, et en ce qu'un collecteur (3) est disposé derrière ladite hélice à faucher (1) ensemble avec ladite chemise (2).

11. Faucheuse à hélice selon la revendication 6,
**caractérisée** en ce que ladite hélice (1) est suivie d'un cylindre profilé en aval (26), qui interagit avec ledit arc d'écoulement (5) afin de former un interstice à recevoir le matériau finement broyé (25), qui s'écoule en dehors de ladite hélice et ladite garniture à barrettes (26).

12. Faucheuse à hélice selon la revendication 11,
**caractérisée** en ce que ledit cylindre (26) reste, à pression, de façon rotative, sur ledit matériau en tiges (25), et tourne, à un nombre de tours plus grand que la vitesse du mouvement, ce qui est requis pour le dépôt ondulée dudit tapis (27) en tiges d'herbe compactées.

13. Faucheuse à hélice selon les revendications 6 et 7,
**caractérisée** en ce qu'un capot protecteur (28) et ledit tronçon d'entrée avant (23) sont appropriés à être pivotés en haut, et en ce que ladite hélice (1), en tant que l'organe ramasseur, est suivie d'une soufflante de transport en aval ou d'un convoyeur mécanique.

14. Faucheuse à hélice selon les revendications 1 à 13,
**caractérisée** en ce qu'une hacheuse (10) et une roue épandeuse (11) sont disposées sur le même axe de façon à suivre en sens de transport.

15. Faucheuse à hélice selon les revendications 1 à 14,
**caractérisée** en ce que ladite chemise (2) est prolongée, en sens en haut, par un élément rebondisseur (9), de façon à former un bac de transport dans la zone arrière relativement à ladite hélice à faucher.

16. Faucheuse à hélice selon les revendications 1 à 15,
**caractérisée** en ce que ladite chemise (2) porte un palpeur (6) dans sa partie avant, et en ce que ladite faucheuse à hélice est entourée par un quadrilatère à articulations, dont un bras oscillant inférieur a une longueur plus courte que le bras oscillant supérieur.

17. Faucheuse à hélice selon une quelconque des revendications 1 à 16,
**caractérisée** en ce qu'un dispositif décolleteur, qui est formé par un palpeur et une lame décolleteuse, est disposé de façon à suivre l'hélice à faucher, qui est fixée dans un bâti de machine (13).

18. Faucheuse à hélice selon une quelconque des revendications 1 à 17,
**caractérisée** en ce que ladite hélice à faucher, qui tourne en sens horaire, est entourée par une chemise (2) dans sa partie arrière, à des doigts palpeurs (18) étant disposés sur ladite chemise, qui s'étendent au-dessous de ladite hélice à faucher en sens vers l'avant, et qui sont pliés en haut, sous forme de patins, en sens de mouvement, et derrière lesquelles est disposés une lame décolleteuse (17), de façon que la dernière soit en déport en bas, par une distance (a) relative au bord inférieur desdits doigts palpeurs, qui restent sur le collet de betterave.

19. Faucheuse à hélice selon une quelconque des revendications 1 à 18,
**caractérisée** en ce que des doigts palpeurs (20) sont disposés en avant de ladite hélice (1), qui tourne en sens inverse horaire, lesdits doigts palpeurs ayant des bords inférieurs à un niveau plus haut, par une distance (a), que le niveau du bord inférieure de ladite hélice à faucher (1).

20. Faucheuse à hélice selon une quelconque des revendications 1 à 19,
**caractérisée** en ce que ledit tranchant de coupe (22) de ladite hélice à faucher (1) est interrompu par des tronçons d'appui (*s*₁; *s*₂), qui font saillie dudit tranchant de coupe en sens radial, par un petit montant (b), et qui s étendent, sans aucune inclinaison (comme segment de disque orthogonal sur l'axe), et de plus en ce qu'une lame (21), qui s'étend au dessous de ladite hélice, est affectée à ladite hélice, qui est en déport en bas par l'épaisseur (a) des tranches décolletées.

21. Faucheuse à hélice selon une quelconque des revendications 1 à 20,
**caractérisée** en ce qu'un affiloir (12) est radialement appliqué contre ladite hélice à faucher (1) en rotation, qui est approprié à un mouvement va-etvient en sens axial sur une tige.

22. Faucheuse à hélice selon une quelconque des revendications 1 à 21,
**caractérisée** en ce que ladite hélice à faucher est entraînée par un électromoteur (12'), qui est incorporé, comme partie essentielle, dans ladite hélice à faucher.
